Europäisches Patentamt

European Patent Office

Office européen des brevets

(19)

(11) Numéro de publication : **0 093 657**
**B1**

(12) **FASCICULE DE BREVET EUROPÉEN**

(45) Date de publication du fascicule du brevet :
**08.07.87**

(51) Int. Cl.⁴ : **F 16 D 66/02**

(21) Numéro de dépôt : **83400837.7**

(22) Date de dépôt : **27.04.83**

(54) **Procédé de surveillance de l'état d'usure de garnitures de frein à disque, indicateur d'usure et frein à disque.**

(30) Priorité : **27.04.82 FR 8207221**

(43) Date de publication de la demande :
**09.11.83 Bulletin 83/45**

(45) Mention de la délivrance du brevet :
**08.07.87 Bulletin 87/28**

(84) Etats contractants désignés :
**DE GB IT**

(56) Documents cités :
**DE-A- 2 929 039**
**FR-A- 1 585 646**
**FR-A- 2 485 132**

(73) Titulaire : **BENDIX France**
**126, rue de Stalingrad**
**F-93700 Drancy (FR)**

(72) Inventeur : **Le Deit, Gérard**
**38 rue Aimé Fluttaz**
**F-77181 Courtry (FR)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

La présente invention concerne les procédés de surveillance de l'état d'usure de garnitures de friction de freins à disque et, plus particulièrement, un procédé de surveillance de l'état d'usure de la garniture du patin extérieur d'un frein à disque à structure d'étrier coulissant et les indicateurs d'état d'usure pour la mise en œuvre de ce procédé.

On sait que, dans les freins à disque, il est hautement souhaitable, notamment pour des raisons de sécurité, de surveiller l'état d'usure des garnitures. Diverses techniques ont été proposées, qui mettent souvent en œuvre des moyens de détecteur incorporés aux garnitures. Pour s'affranchir de ces techniques, relativement simples et fiables mais onéreuses au plan de la fabrication et de l'utilisation, il a également été envisagé, essentiellement pour les freins à disque du type à structure d'étrier coulissant, de détecter le déplacement d'un organe structurel du frein lié au patin que l'on désire surveiller (résultant de l'usure de la garniture dudit patin). Il se pose, à ce niveau, un problème tenant à la somme des tolérances du frein qui interviennent sur la position d'alerte d'usure, en limitant donc grandement la précision de la surveillance.

Le brevet français No. 1 585 646 décrit ainsi un détecteur d'usure monté par vissage dans le support stationnaire du frein et coopérant, en fin d'usure des patins, avec une extrémité d'une branche d'une épingle en U immobilisant radialement les patins de freinage et montée par un cavalier sur la partie extérieure de l'étrier ou anneau de transfert. En raison des problèmes de tolérances sus-mentionnés, un tel système a une précision limitée en raison de la plage importante d'actionnement pouvant donner lieu à une alerte soit trop prématurée soit trop tardive, préjudiciable au bon fonctionnement du frein.

D'autres solutions existantes imposent, par ailleurs, de passer un fil électrique par dessus le disque pour surveiller le patin extérieur. Un exemple de cette technique est décrit dans le document FR-A-2 431 402 (=DE-A- 2 929 039) qui concerne un indicateur d'usure comportant un corps monté sur la face extérieure du support de frein stationnaire et comprenant un plongeur coulissant librement dans le corps et solidarisé par friction à une broche de guidage de la structure d'étrier. Or dans ce type de montage, le fil ramené de l'indicateur vers l'intérieur du frein peut être endommagé soit par le frottement sur le disque tournant, soit également par la chaleur dégagée par le disque lors du freinage.

La présente invention a précisément pour objet d'éviter les inconvénients de ces techniques antérieures en proposant un procédé de surveillance de l'état d'usure de la garniture du patin extérieur d'un frein à disque à structure d'étrier coulissant de mise en œuvre simple, de fonctionnement précis et fiable, évitant de faire passer un fil électrique par dessus le disque du frein et garantissant une parfaite précision de fonctionnement quels que soient les niveaux de tolérance lors de la fabrication et du montage du frein.

Pour ce faire, selon une caractéristique de la présente invention, le procédé de surveillance de l'état d'usure de la garniture du patin extérieur du frein à disque à étrier coulissant, mettant en œuvre un détecteur comprenant un corps de montage et un ensemble palpeur-contacteur déplaçables l'un par rapport à l'autre et comprenant l'étape de détecter le déplacement relatif entre l'ensemble palpeur-contacteur et le corps de montage, est caractérisé en ce qu'il comprend l'étape de monter dans la structure d'étrier le corps de montage et de solliciter élastiquement l'ensemble palpeur-contacteur vers l'extérieur du corps de montage pour qu'il porte en permanence en appui contre une surface de référence du support stationnaire.

Selon une autre caractéristique de la présente invention, l'indicateur de l'état d'usure de la garniture du patin extérieur d'un frein stationnaire, comprenant un corps de montage et un élément palpeur-contacteur déplaçable par rapport au corps de montage et comportant une extrémité susceptible de faire saillie hors du corps de montage, est caractérisé en ce qu'il comprend, dans le corps de montage, un organe élastique sollicitant l'élément palpeur-contacteur pour normalement écarter du corps l'extrémité de l'élément palpeur-contacteur, et des moyens pour monter le corps de montage sur la structure d'étrier de facon que l'extrémité de l'élément palpeur-contacteur sollicité par l'organe élastique porte en appui contre le support de frein.

D'autres caractéristiques et avantages de la présente invention ressortiront de la description suivante de deux modes de réalisation, donnés à titre illustratif mais nullement limitatif, faites en relation avec les dessins annexés, sur lesquels :

la figure 1 est une vue du côté intérieur d'un frein à disque à structure d'étrier coulissant agencé pour être pourvu d'un indicateur d'état d'usure selon l'invention ;

la figure 2 est une coupe schématique axiale du frein de la figure 1 équipé de garnitures de patin neuves ;

la figure 3 est une coupe analogue à celle de la figure 2 montrant la configuration du frein avec les garnitures de patin usées ;

la figure 4 est une vue en coupe longitudinale d'un indicateur d'usure selon la présente invention en configuration ramassée correspondant à l'état de montage sur le frein à garnitures neuves selon la figure 2 ;

la figure 5 est une vue analogue à celle de la figure 4 montrant le plongeur de l'indicateur en configuration sortie correspondant à l'état du frein avec des garnitures usées selon la figure 3 ; et

la figure 6 est une vue en coupe analogue à celle de la figure 4, montrant un autre mode de réalisation de l'indicateur d'usure selon l'invention.

Dans la description qui va suivre et sur les dessins, les éléments identiques et/ou analogues portent les mêmes chiffres de référence.

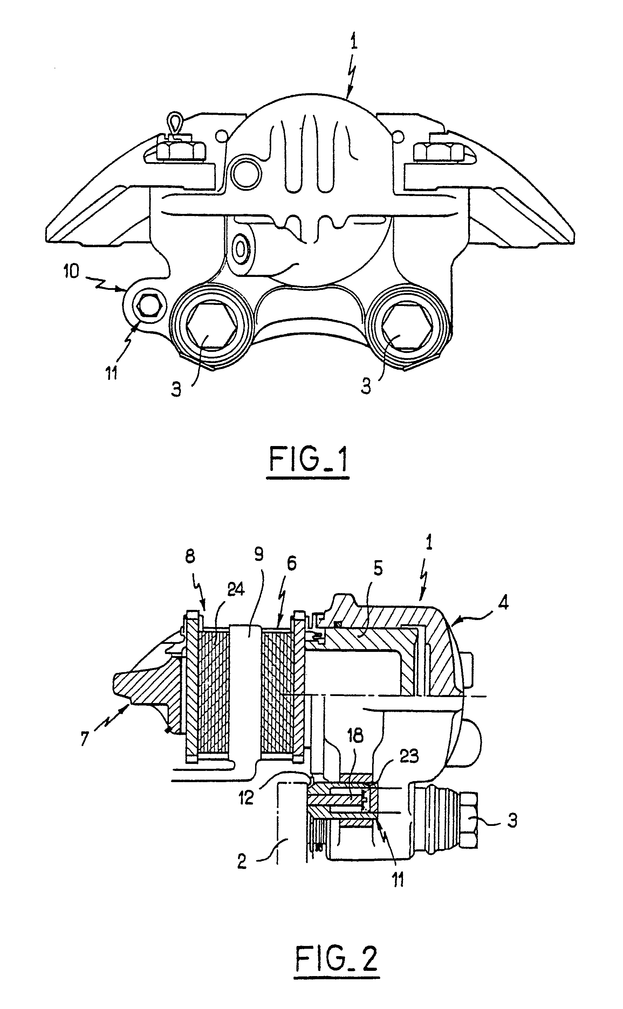

On a représenté sur les figures 1 à 3 un frein à disque du type à structure d'étrier 1 supportée à coulissement sur un support stationnaire de frein 2, par exemple un porte-fusée de roues, au moyen de deux broches repérées par leurs têtes de montage 3, dont les extrémités extérieures sont fixées au support stationnaire 2. De façon classique, la structure d'étrier 1 comprend une partie intérieure 4 renfermant le piston d'actionnement hydraulique 5 agissant directement sur la plaquette de frein intérieure 6, et une partie extérieure 7 sollicitant le patin extérieur 8, le disque 9 du frein étant positionné entre les garnitures des patins intérieur 6 et extérieur 8.

Conformément à l'invention, la partie intérieure 4 de la structure d'étrier 1 comporte une aile latérale 10 servant au montage de l'indicateur d'usure 11 et agencée pour que cet indicateur d'usure 11 ait sa partie extérieure en face d'une surface de référence 12 du support stationnaire 2.

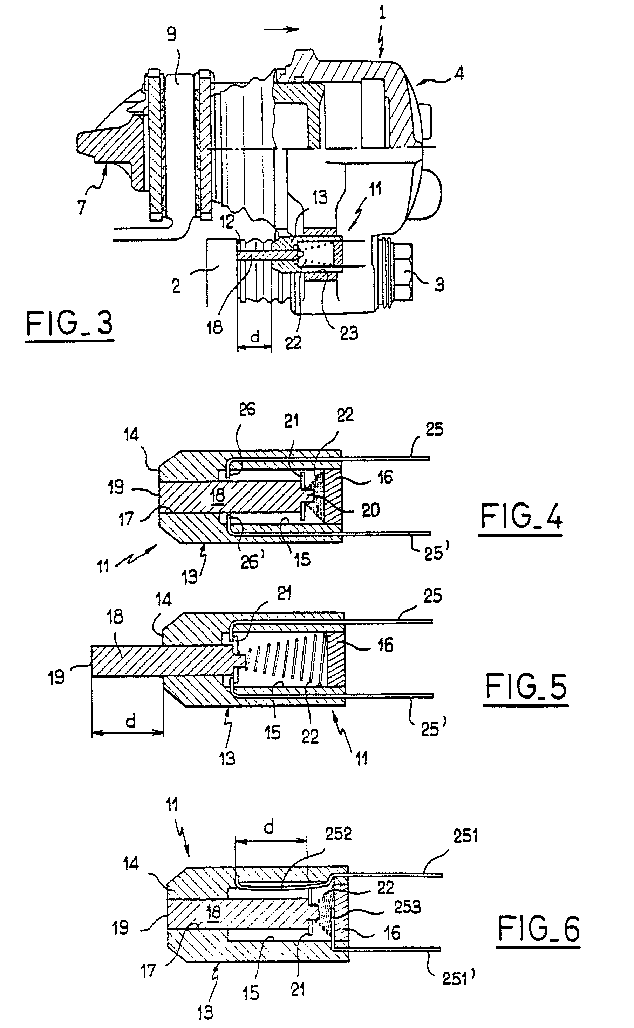

De façon plus spécifique, comme détaillé sur les figures 4 et 5, l'indicateur d'usure 11 selon la présente invention comprend un corps de détecteur 13 de configuration générale cylindrique terminé par une face frontale 14 et pourvu d'une chambre interne 15 fermée vers l'arrière par une paroi d'obturation 16 et débouchant dans la face frontale 14 par un alésage axial 17. Dans le corps 13 est monté coulissant un plongeur cylindrique 18 de diamètre extérieur correspondant au diamètre intérieur de l'alésage 17, pourvu d'une face d'extrémité plane 19 et d'un têton arrière axial 20 sur lequel est montée une rondelle métallique de contact 21 formant également support de maintien et d'appui pour un ressort hélicoïdal à spires évolutives 22 dont l'extrémité de plus grand diamètre porte contre la face interne de la cloison d'obturation 16.

Le corps 13 et le plongeur 18 sont réalisés en matériaux isolants et sont dimensionnés de façon que, en configuration ramassée, le plongeur 18 puisse être totalement rétracté, à l'encontre de la force de sollicitation du ressort 22, à l'intérieur du corps avec les faces d'extrémité 14 du corps et 19 du plongeur coplanaires (figures 2 et 4). Comme on le voit sur les figures 2 et 3, la zone de montage 10 de la partie intérieure 4 de la structure d'étrier 1 comporte un alésage traversant 23 d'axe parallèle à l'axe de rotation du disque 9 et débouchant en regard de la surface de référence 12 du support stationnaire 2.

Dans la configuration représentée sur la figure 2, où le frein est équipé de plaquettes neuves, le corps 13 de l'indicateur 11, réalisé avantageusement en matériau plastique semi-dur, est emmanché légèrement à force dans l'alésage 23 depuis l'extrémité intérieure de ce dernier jusqu'à ce que la face frontale 14 du corps 13 vienne porter contre la surface de référence 12 du support stationnaire 2, en provoquant ainsi la complète rétractation du plongeur 18 dans la configuration représentée sur la figure 4. De cette façon, quelles que soient les variations des tolérances dans le montage du frein et de ses patins, ce positionnement en butée du dispositif selon l'invention assure automatiquement sa « mise à zéro », l'élément palpeur prenant simultanément sa place initiale. De plus, l'effort de montage du corps 13 dans l'alésage 23 assure le maintien stable de l'indicateur 11 dans sa position initiale ainsi définie.

Au fur et à mesure de l'usure des garnitures des patins de friction du frein, l'ensemble de la structure d'étrier 1 se déplace dans le sens de la flèche de la figure 3 par rapport au support stationnaire 2, entraînant de ce fait le corps d'indicateur 13 tandis que le plongeur 18 demeure plaqué par son extrémité 19 contre la surface de référence 12 du support stationnaire 2 sous l'effet du ressort 22. Lorsque l'ensemble de la structure d'étrier 1 s'est déplacé par rapport à la surface de référence 12 du support stationnaire 2 d'une distance d correspondant exactement à l'usure maximale admise pour la garniture 24 du patin extérieur 8, l'indicateur d'usure se trouve dans la configuration représentée sur la figure 5, c'est-à-dire avec le plongeur 18 faisant saillie par rapport à la surface frontale 14 du corps 13 de la même distance d, position dans laquelle l'indicateur fournit un signal d'alarme au système d'alerte dont est pourvu l'habitacle du véhicule. De fait, avec l'agencement selon l'invention, au fur et à mesure de l'usure des garnitures des patins de friction, le corps 13 de l'indicateur se déplace vers l'intérieur tandis que le plongeur 18 demeure immobile dans un repère de référence absolu, en demeurant plaqué contre la surface de référence fixe 12 du support stationnaire 2. La détection du déplacement relatif entre les deux éléments constitutifs de l'indicateur s'effectue comme suit.

Dans le mode de réalisation représenté sur les figures 4 et 5, deux conducteurs électriques 25 et 25' sont noyés dans l'épaisseur du corps 13 de part et d'autre de la chambre 15 et sont rabattus vers l'intérieur pour faire saillie dans cette chambre 15 en formant des contacts 26 et 26' interposés sur le trajet vers l'extérieur de la rondelle 21 pour établir un contact avec cette dernière lorsque le plongeur fait saillie vers l'extérieur du corps 13 d'une distance d et fermer ainsi le circuit électrique relié aux conducteurs 25 et 25' et situé entièrement du côté intérieur du frein, sans qu'aucun élément du circuit n'ait à chevaucher le disque.

Dans le mode de réalisation de la figure 6, le conducteur de raccordement 251 se prolonge, à l'intérieur du corps 13 de l'indicateur, par une languette 252 logée dans une rainure longitudinale débouchant dans la chambre 15 de façon à faire normalement saillie radialement vers l'intérieur par rapport au cylindre effectif de déplacement de la périphérie de la rondelle 21. L'autre conducteur de raccordement 251' comporte une patte de connexion 253 rabattue contre la face interne de la cloison d'obturation 16 et sur laquelle porte l'extrémité élargie du ressort 22. De cette façon, dans la configuration de repos représentée sur la figure 6, le circuit électrique est fermé entre les conducteurs 251 et 251' par la languette 252 en contact avec la rondelle 21, et le ressort 22 en contact avec cette rondelle et contre la patte de connexion 253. La longueur axiale utile de la languette élastique de contact 252 est déterminée de façon que, lorsque le plongeur 18 est déplacé vers l'extérieur de la même distance d que dans le mode de réalisation précédent, le contact entre la rondelle 21 et la languette 252 est interrompu, ce qui ouvre ainsi le circuit électrique relié aux conducteurs 251 et 251'.

## Revendications

1. Procédé de surveillance de l'état d'usure de la garniture (24) du patin extérieur (8) d'un frein à disque à structure d'étrier (1) coulissant par rapport à un support de frein stationnaire (2) au moyen d'un détecteur (11) comprenant un corps de montage (13) et un ensemble palpeur-contacteur (18, 21) déplaçables l'un par rapport à l'autre, et comprenant l'étape de détecter le déplacement relatif entre l'ensemble palpeur-contacteur (18, 21) et le corps de montage (13) caractérisé en ce qu'il comprend les étapes de monter dans la structure d'étrier (1) le corps de montage (13) et de solliciter élastiquement l'ensemble palpeur-contacteur (18, 21) vers l'extérieur du corps de montage (13) pour qu'il porte en permanence en appui contre une surface de référence (12) du support stationnaire (2).

2. Procédé selon la revendication 1, caractérisé en ce qu'il comprend l'étape, le frein étant pourvu de garnitures neuves (6, 8), de monter le corps de montage (13) par emmanchement axial dans la partie intérieure (4) de la structure d'étrier (1) de façon qu'une face de référence (14) du corps de montage (13) porte en appui contre la surface de référence (12).

3. Indicateur de l'état d'usure de la garniture (24) du patin extérieur (8) d'un frein à disque à structure d'étrier (1) coulissant par rapport à un support de frein stationnaire (2), le détecteur comprenant un corps de montage (13) et un élément palpeur-contacteur (18, 21) déplaçable par rapport au corps et comportant une extrémité (19) susceptible de faire saillie hors du corps de montage (13), caractérisé en ce qu'il comprend, dans le corps de montage (13), un organe élastique (22) sollicitant l'élément palpeur-contacteur (18, 21) pour normalement écarter du corps l'extrémité (19) de l'élément palpeur-contacteur (18, 21) et des moyens (10, 23) pour monter le corps de montage (13) sur la structure d'étrier (1) de façon que l'extrémité (19) de l'élément palpeur-contacteur (18, 21) sollicité par l'organe élastique (22) porte en appui contre le support de frein (2).

4. Indicateur selon la revendication 3, caractérisé en ce qu'il comprend des moyens (21, 26, 26',

252) coopérants sur le corps de montage (13) et sur l'élément palpeur-contacteur (18, 21) pour fournir un signal d'alarme lorsque l'extrémité de l'élément palpeur-contacteur atteint une position écartée du corps (13) d'une distance prédéterminée (d).

5. Indicateur selon la revendication 3 ou la revendication 4, caractérisé en ce que l'élément palpeur-contacteur (18, 21) est constitué d'un plongeur (18) coulissant dans le corps de montage (13) pour faire normalement saillie, sous la sollicitation de l'organe élastique (22), par rapport à une face de référence (14) du corps (134).

6. Indicateur selon la revendication 5, caractérisé en ce que le corps de montage (13) présente une configuration générale cylindrique et est terminé, à une extrémité, par une face frontale (14) au travers de laquelle fait saillie le plongeur (18) et définissant ladite face de référence (14).

7. Indicateur selon l'une des revendications 4 à 6, caractérisé en ce qu'il comprend des moyens (21, 26, 26') pour fermer un circuit électrique lorsque ladite position est atteinte.

8. Indicateur selon l'une des revendications 4 à 6 caractérisé en ce qu'il comprend des moyens (21, 252) pour ouvrir un circuit électrique lorsque ladite position est atteinte.

9. Indicateur selon l'une des revendications 6 à 8 caractérisé en ce que le corps de montage (13) est réalisé en matériau plastique semi-dur.

10. Frein à disque à structure d'étrier (1) coulissant par rapport à un support de frein stationnaire (2) comportant des moyens de montage d'un indicateur de l'état d'usure de la garniture (24) du patin extérieur (8) selon l'une des revendications 6 à 9, caractérisé en ce qu'il comprend, solidaire de la partie intérieure (4) de la structure d'étrier (1), une partie de montage d'indicateur (10) comprenant un trou traversant (23) d'axe parallèle à l'axe du frein faisant face à une partie (12) du support de frein stationnaire (2) et dimensionné pour recevoir à emmanchement le corps de montage (13) de l'indicateur (11).

## Claims

1. A method of monitoring wear of the friction member (24) of the external brake pad (8) of a disk brake having a caliper assembly (1) sliding with respect to a stationary brake support (2) by means of a detector (11) comprising a mounting body (13) and a sensor probe assembly (18, 21) displaceable with respect to each other, and comprising the step of detecting the relative displacement between the sensor probe assembly (18, 21) and the mounting body (13), characterized in that it comprises the steps of mounting the mounting body (13) in the caliper assembly (1) and resiliently biassing the sensor probe assembly (18, 21) towards the exterior of the mounting body (13) such that it permanently engages a reference surface (12) of the stationary support (2).

2. The method of claim 1, characterized in that it comprises, when the brake is provided with fresh friction members (6, 8), the step of mounting the mounting body (13) by axial insertion into the internal portion (4) of the caliper assembly (1) such that a reference surface (14) of the mounting body (13) engages the reference surface (12).

3. Wear indicator for the friction member (24) of the external brake pad (8) of a disk brake having a caliper (1) sliding with respect to a stationary brake support (2), the detector comprising a mounting body (13) and a sensor probe element (18, 21) displaceable with respect to the body and having an extremity (19) adapted to project from the mounting body (13), characterized in that it comprises, in the mounting body (13), a resilient member (22) biassing the sensor probe element (18, 21) so as to normally space the extremity (19) of the sensor probe element (18, 21) from the body, and means (10, 23) for mounting the mounting body (13) on the caliper assembly (1) such that the extremity (19) of the sensor probe element (18, 21) biassed by the resilient member (22) engages the brake support (2).

4. The indicator of claim 3, characterized in that it comprises means (21, 26, 252) cooperating on the mounting body (13) and on the sensor probe element (18, 21) to generate an alarm signal when the extrimity of the sensor probe element has reached a position spaced from the body (13) by a predetermined distance (d) .

5. The indicator of claim 3 or claim 4, characterized in that the sensor probe element (18, 21) comprises a plunger (18) sliding in the mounting body (13) for normally projecting from a reference face (14) of the body (13) under the bias of the resilient member (22).

6. The indicator of claim 5, characterized in that the mounting body (13) is of a general cylindrical configuration and is delimited at one end by a front face (14) across which said plunger (18) projects and which defines said reference surface (14).

7. The indicator of any of claims 4 to 6, characterized in that it comprises means (21, 26, 26') for closing an electric circuit when said position has been reached.

8. The indicator of any of claims 4 to 6, characterized in that it comprises means (21, 252) for opening an electric circuit when said position has been reached.

9. The indicator of any of claims 6 to 8, characterized in that the mounting body (13) is made from a semi-rigid plastic material.

10. A disk brake having a caliper (1) sliding with respect to a stationary brake support (2) comprising means for mounting a wear indicator for indicating wear of the friction member (24) of the external brake pad (8) according to any of claims 6 to 9, characterized in that it comprises a mounting portion integral with the internal portion (4) of the caliper assembly (1) for mounting the indicator (10), said mounting portion comprising a thru-hole (23) having an axis parallel to the axis of the brake, facing a portion (12) of the stationary brake support (2) and dimensioned to fittingly receive the mounting body (13) of the indicator (11).

## Patentansprüche

1. Verfahren zum Überwachen des Abnutzungsgrades des Belages (24) des äußeren Bremsbackens (8) einer Scheibenbremse mit einem Bremssattel (1), der bezüglich eines ortsfesten Bremsträgers (2) gleitet, und zwar mittels eines Detektors (11) mit einem Haltekörper (13) und einer Kontakttasteranordnung (18, 21), die relativ zueinander verschiebbar sind, bei welchem Verfahren die Relativverschiebung zwischen der Kontakttasteranordnung (18, 21) und dem Haltekörper (13) festgestellt wird, dadurch gekennzeichnet, daß das Verfahren die Verfahrensschritte umfaßt, den Haltekörper (3) in den Bremssattel (1) einzusetzen und die Kontakttasteranordnung (18, 21) in Richtung aus dem Haltekörper (13) heraus elastisch so vorzuspannen, daß sie beständig an einer Bezugsfläche (12) des stationären Bremsträgers (2) anliegt.

2. Verfahren nach Anspruch 1, dadurch gekennzeichnet, daß der Montagekörper (13), wenn die Bremse mit neuen Bremsbelägen (6, 8) versehen ist, durch axiales Einführen in den Innenteil (4) des Bremssattels (1) derart montiert wird, daß eine Bezugsfläche (14) des Haltekörpers (13) an der Bezugsfläche (12) anliegt.

3. Anzeigevorrichtung für den Abnutzungsgrad des Bremsbelages (24) des äußeren Bremsbackens (8) einer Scheibenbremse mit einem Bremssattel (1), der bezüglich eines ortsfesten Bremsträgers (2) gleitet, wobei der Detektor einen Haltekörper (13) und ein bezüglich des Haltekörpers verschiebbares Kontakttasterelement (18, 21) aufweist, das mit einem Ende (19) aus dem Haltekörper (13) vorsteht, gekennzeichnet durch ein im Haltekörper (13) vorgesehenes elastisches Organ (22), das das Kontakttasterelement (18, 21) so vorspannt, daß das Ende (19) des Kontakttasterelementes (18, 21) normalerweise einen Abstand zum Haltekörper hat, und Mittel (10, 23), durch die der Haltekörper (13) am Bremsbacken (1) so angebracht ist, daß das Ende (19) des von dem elastischen Organ (22) vorgespannten Kontakttasterlementes (18, 21) an dem Bremsträger (2) anliegt.

4. Anzeigevorrichtung nach Anspruch 3, gekennzeichnet durch Mittel (21, 26, 252), die mit dem Haltekörper (13) und dem Kontakttasterelement (18, 21) so zusammenwirken, daß sie ein Alarmsignal erzeugen, wenn das Ende des Kontakttasterelementes eine Stellung erreicht, die von dem Haltekörper (13) einen vorgegebenen Abstand (d) hat.

5. Anzeigevorrichtung nach Anspruch 3 oder 4, dadurch gekennzeichnet, daß das Kontakttasterelement (18, 21) von einem Plunger (18) gebildet wird, der in dem Haltekörper (13) so gleitet, daß er unter der Vorspannung des elastischen Organs (22) normalerweise bezüglich einer Bezugsfläche (14) des Haltekörpers (13) vorsteht.

6. Anzeigevorrichtung nach Anspruch 5, dadurch gekennzeichnet, daß der Haltekörper (13) eine im wesentlichen zylindrische Form hat und an einem Ende von einer Stirnfläche (14) begrenzt wird, durch die der Plunger (18) hindurchvorsteht und die besagte Bezugsfläche (14) bildet.

7. Anzeigevorrichtung nach einem der Ansprüche 4 bis 6, gekennzeichnet durch Mittel (21, 26, 26'), die einen elektrischen Kreis schließen, wenn die besagte Stellung erreicht ist.

8. Anzeigevorrichtung nach einem der Ansprüche 4 bis 6, gekennzeichnet durch Mittel (21, 252), die einen elektrischen Kreis öffnen, wenn die besagte Stellung erreicht ist.

9. Anzeigevorrichtung nach einem der Ansprüche 6 bis 8, dadurch gekennzeichnet, daß der Haltekörper (13) aus einem halbfesten Kunststoff hergestellt ist.

10. Scheibenbremse mit einem Bremssattel (1), der bezüglich eines stationären Bremsträgers (2) gleitet, der versehen ist mit Mitteln zum Einbau einer Anzeigevorrichtung für den Abnutzungsgrad des Bremsbelages (24) des äußeren Bremsbackens (8) nach einem der Ansprüche 6 bis 9, gekennzeichnet durch einen mit dem Innenteil (4) des Bremsbackens (1) einstückigen Montageabschnitt zum Einbau der Anzeigevorrichtung (10) mit einer Durchgangsbohrung (23), deren Achse parallel zur Achse der Bremse verläuft, die einem Abschnitt (12) des ortsfesten Bremsträgers (2) zugewandt und so bemessen ist, daß sie den Montagekörper (13) der Anzeigevorrichtung (11) mit Paßsitz aufnimmt.

FIG_1

FIG_2

FIG_3

FIG_4

FIG_5

FIG_6